# EUROPÄISCHE PATENTSCHRIFT

(11) **EP 3 150 982 B1**
(45) Veröffentlichungstag und Bekanntmachung des Hinweises auf die Patenterteilung: **01.08.2018**
(21) Anmeldenummer: 16185419.5
(22) Anmeldetag: 24.08.2016
(51) Int. Cl.: G01K 15/00

(54) **TEMPERATURKALIBRATOR UND VERFAHREN ZUM KÜHLEN UND HEIZEN EINES TEMPERATURKALIBRATORS**
TEMPERATURE CALIBRATOR AND METHOD FOR COOLING AND HEATING A TEMPERATURE CALIBRATOR
ÉTALONNEUR DE TEMPERATURE ET PROCEDE DE REFROIDISSEMENT ET DE CHAUFFAGE D'UN ETALONNEUR DE TEMPERATURE

(30) Priorität: 01.10.2015 DE 102015116661
(43) Veröffentlichungstag der Anmeldung: 05.04.2017
(73) Patentinhaber: SIKA Dr.Siebert & Kühn GmbH & Co. KG., 34260 Kaufungen (DE)
(72) Erfinder: Siebert, Sebastian, 34131 Kassel (DE); Friedrichs, René, 37075 Göttingen (DE); Rehm-Gumbel, Michael, 34305 Niedenstein (DE); Meth, Thomas, 34260 Kaufungen (DE)
(74) Vertreter: Patentanwälte Walther Hinz Bayer PartGmbB

(56) Entgegenhaltungen:
- EP-A1- 2 793 008
- GB-A- 2 114 293

## Beschreibung

Die überwiegende Zahl der in Industrie und Forschung eingesetzten Temperaturfühler sind Sekundärthermometer. Das heißt, die entsprechenden Temperaturfühler, die z.B. Thermoelemente oder temperaturabhängige Widerstände enthalten, müssen mindestens vor Ihrer ersten Verwendung und meist auch im Laufe ihres Einsatzes wiederholt kalibriert werden. Dazu werden beim Vergleichsverfahren die zu kalibrierenden Temperaturfühler in temperaturstabilisierten Öfen oder Bädern mit einem Normalthermometer verglichen. Tragbare Vorrichtungen, die ein entsprechendes Kalibriervolumen auf eine vorgebbare konstante Solltemperatur temperieren, sind aus der Schrift US 39 39 687 A bekannt.

Um eine optimale thermische Ankopplung der Prüflinge an das Kalibriervolumen zu gewährleisten, können verschiedene auf die zu prüfenden bzw. zu kalibrierenden Temperaturfühler angepasste Einsätze als Festkörper in das Kalibriervolumen eines Temperaturkalibrators eingesetzt werden. Diese Einsätze füllen das Kalibriervolumen weitgehend aus und besitzen Aussparungen, in die die zu kalibrierenden Temperaturfühler eingebracht werden können. Um eine möglichst konstante räumliche Temperaturverteilung innerhalb des Kalibriervolumens zu erreichen, sollte bei einem Trockenblocktemperaturkalibrator der Einsatz bzw. bei einem Temperaturkalibrierbad das Kalibriermedium eine möglichst hohe thermische Leitfähigkeit besitzen.

Darüber hinaus ist aus der DE 10 2010 010 618 A1 ein Kühl- und/oder Gefriergerät mit einem Temperatursensor zur Erfassung der Temperatur an einer Stelle oder eines Bestandteils des Kühl- und/oder Gefriergerätes. Der Sensor weist hierbei magnetokalorisches Material auf oder besteht zumindest teilweise aus solchem Material.

Die DE 11 2006 001 628 T5 als weiterer Stand der Technik beschreibt eine ferromagnetische Formgedächtnislegierung, die zur Formwiederherstellung fähig ist. Die Formwiederherstellung ist hierbei begleitet von einer magnetischen Änderung aufgrund einer magnetfeldinduzierten Rückumwandlung in einem praktischen Temperaturbereich.

Da das Kalibriervolumen auf die vom Nutzer vorgegebene Solltemperatur temperiert werden soll, kann über einen thermisch leitfähigen Körper, der das Kalibriervolumen umgibt, dem Kalibriervolumen, in dem sich z.B. ein Einsatz mit eingebrachten Temperaturfühlern befindet, Wärme entzogen oder hinzugefügt werden. Dieser Wärmeleitungskörper ist bei tragbaren Kalibratoren typischerweise als Metallblock ausgeführt und steht in thermischem Kontakt mit Kühleinheiten, wie z.B. Peltier-Elementen, wie in der DE 20 2005 006 710 U1 beschrieben, und Heizeinheiten, wie z.B. einer Widerstandsheizung.

Aus der EP 2 793 008 A1 ist ein Temperaturkalibrator zur Kalibrierung von Temperaturfunktionseinrichtungen bekannt, z. B. zur Kalibrierung von Thermometern oder von thermischen Schaltern, mit einer Kalibriereinrichtung, die einen Kalibratorblock mit einer Kavität zum Zweck der Aufnahme eines Aufnahmekörpers für mindestens eine zu kalibrierende Temperaturmesseinrichtung aufweist, wobei der Kalibratorblock ein Material mit thermisch isolierenden Eigenschaften aufweist wobei und der Aufnahmekörper ein Material mit thermisch leitfähigen Eigenschaften aufweist. In dem Kalibratorblock ist im Bereich der Kavität mindestens eine Heizeinrichtung eingebettet.

Weiterhin ist aus der GB 2 114 293 A eine Einrichtung zur Kalibrierung von Geräten mit einer Temperatursensoreinheit bekannt, die eine Kammer aufweist, in der die Temperatursensoreinheit aufgenommen werden kann Die Einrichtung umfasst Mittel zur Erzeugung und Einstellung einer geforderten Temperatur innerhalb der Kammer. Weiterhin weist die Einrichtung Mittel zur Erfassung einer aktuellen Temperatur in der Kammer auf. Um einen schnellen Temperaturwechsel in der Kammer erzeugen zu können, umfasst die Kammer weiterhin eine HF-Spule mit einer Mittelachse, die mit der Mittelachse der Kammer zusammenfällt. Die Spule ist dabei mit einem einstellbaren HF-Generator verbunden.

Zum Einstellen der Temperatur des Kalibriervolumens sind die Kühleinheiten, z.B. Peltier-Elemente, und Heizeinheiten, z.B. eine Widerstandsheizung, elektrisch mit einer elektrischen Steuereinheit verbunden. Diese Steuereinheit ist darüber hinaus elektrisch mit mindestens einem Temperatursensor verbunden, der in thermischem Kontakt mit dem Kalibriervolumen steht, und regelt durch geeignetes Steuern der Leistung der Temperiereinheiten die Temperatur des Kalibriervolumens. Die Ansprechzeiten dieser leistungsgesteuerten Temperaturregelung sind sowohl im Heiz als auch im Kühlbetrieb sehr lang. Im Heizbetrieb muss die Wärme zunächst von den Heizeinheiten erzeugt werden, um danach über den Wärmeleitungskörper, der typischerweise durch den Metallbock des Temperaturkalibrators gebildet wird, in das Kalibriervolumen transportiert zu werden. Der Wärmetransport erfolgt dabei aufgrund eines Temperaturgradienten zwischen den Heizeinheiten und dem Kalibriervolumen. Im Kühlbetrieb muss zunächst Wärme von den Kühleinheiten in die Umgebung des Temperaturkalibrators gepumpt werden. Der anschließende Transport der Wärme vom Kalibriervolumen über den Wärmeleitungskörper, der typischerweise durch den Metallbock des Temperaturkalibrators gebildet wird, in die Kühleinheiten erfolgt wieder aufgrund des entsprechenden Temperaturgradienten zwischen den Kühleinheiten und dem Kalibriervolumen. Der Erfindung liegt nun die Aufgabe zugrunde dieses träge Prinzip der Änderung der Temperatur des Kalibriervolumens, das im Heizbetrieb wesentlich und im Kühlbetrieb gänzlich auf dem Transport von Wärme basiert, durch ein schnelleres Prinzip zur Änderung der Temperatur des Kalibriervolumens zu ersetzen.

Dazu befindet sich erfindungsgemäß ein magnetokalorisches Material, das einen magnetokalorischen Effekt aufweist, der größer als 1 Kelvin Temperaturhub pro 1 Tesla Magnetfelderhöhung beträgt, in thermischem Kontakt mit dem Kalibriervolumen und in einem von einer Magnetfelderzeugungseinrichtung des Temperaturkalibrators erzeugten Magnetfeld. Es ist bekannt, dass sich die Temperatur des magnetokalorischen Materials ändert, wenn sich die Stärke des Magnetfeldes, dem das Material ausgesetzt ist, ändert. Eine Erhöhung der magnetischen Feldstärke führt zu einer Erhöhung der Temperatur des magnetokalorischen Materials. Umgekehrt führt eine Verringerung der magnetischen Feldstärke zu einer Temperaturerniedrigung. In beiden Fällen wird keine Wärme transportiert und die Geschwindigkeit des Prozesses ist im Wesentlichen durch die Geschwindigkeit der Magnetfeldänderung bestimmt. Durch Wahl geeigneter magnetokalorischer Materialien und entsprechend starker Magnetfeldänderungen lassen sich mit dem erfindungsgemäßen Aufbau innerhalb weniger als einer Sekunde Temperaturänderungen im Temperaturkalibrator von bis zu 4 Kelvin realisieren.

Für den erfindungsgemäßen Aufbau sind besonders geeignet magnetokalorische Materialien, bei denen für mindestens eine Temperatur im Bereich von -70°C bis +50°C der magnetokalorische Effekt größer als 1 Kelvin Temperaturhub pro 1 Tesla angelegtes Magnetfeld ist. In einer bevorzugten Ausführungsform der Erfindung werden daher als magnetokalorische Materialien Gadolinium, Gadolinium Legierungen und Legierungen die Mangan oder Eisen enthalten eingesetzt.

Die Magnetfelderzeugungseinrichtung des erfindungsgemäßen Temperaturkalibrators kann aus einem Permanentmagneten, einem Elektromagneten oder einer Kombination aus beidem bestehen. Zur Einstellung der Stärke des Magnetfeldes, dem das magnetokalorische Material ausgesetzt ist, lässt sich in einer Ausführungsform die Position bzw. die Orientierung des Permanent- oder Elektromagneten relativ zum magnetokalorischen Material einstellen. Dazu kann beispielsweise die Steuereinheit des Kalibrators elektrisch mit einem Schrittmotor bzw.

Linearmotor verbunden sein, der mechanisch mit dem oder den Magneten verbunden ist. In einer bevorzugten Ausführungsform wird durch Positions- bzw. Orientierungsänderungen eines starken Permanentmagneten, mit magnetischen Flussdichten größer als ein Tesla, die Temperatur des magnetokalorischen Materials grob aber mit einem großen Temperaturhub voreingestellt. Grobeinstellung heißt hierbei, dass die Temperatur des Kalibriervolumens nach der Grobeinstellung beispielsweise noch bis zu 250 Millikelvin von der gewünschten Solltemperatur abweichen kann. Zur Feineinstellung der Temperatur des Kalibriervolumens auf einen Wert, der weniger von der Solltemperatur abweicht, ist in einer bevorzugten Ausführung ein Elektromagnet der Magnetfelderzeugungseinrichtung elektrisch mit der Steuereinheit des Kalibrators verbunden. Die Steuereinheit kann dann über eine Einstellung des Spulenstromes des Elektromagneten das Magnetfeld und damit auch die Temperatur des magnetokalorischen Materials sehr schnell und sehr präzise steuern. Die kombinierte Verwendung von Permanentmagneten und Elektromagneten in der Magnetfelderzeugungseinrichtung des Kalibrators ermöglicht so ein präzise Temperatureinstellung über einen großen Temperaturbereich ohne den aufwendigen Einsatz von supraleitenden Spulen, so dass die erfindungsgemäße Einstellung der Temperatur des Kalibriervolumens über die Einstellung eines Magnetfeldes und damit der Temperatur eines magnetokalorischen Materials sogar für tragbare Temperaturkalibratoren möglich ist.

In einer bevorzugten Ausführung der Erfindung befindet sich das magnetokalorische Material im Wärmeleitungskörper der Kalibriereinrichtung. Dies kann beispielsweise dadurch realisiert werden, dass zumindest Teile des den Wärmeleitungskörper bildenden Metallblocks aus einem magnetokalorischen Metall oder einer magnetokalorischen Legierung bestehen.

In einer besonders bevorzugten Ausführung befindet sich das magnetokalorische Material in direktem Kontakt mit den zu kalibrierenden Temperaturfühlern. Dazu können beispielsweise die auf die verschiedenen Fühlerdurchmesser angepassten Einsätze, die in den Metallblock eingesetzt werden können, aus einem magnetokalorischen Metall oder einer magnetokalorischen Legierung bestehen.

Da der magnetokalorische Effekt eines bestimmten Materials in der Umgebung der Curie-Temperatur dieses Materials am größten ist, siehe z.B. "On the Curie temperature dependency of the magnetocaloric effect", J. H. Belo, J. S. Amaral, A. M. Pereira, V. S. Amaral, and J. P. Araujo, Appl. Phys. Lett. 100(24), 242407 (2012), werden in einer erfindungsgemäßen Kalibriereinrichtung magnetokalorische Materialien verwendet, deren jeweilige Curie-Temperaturen im Bereich der für den Temperaturkalibratur einstellbaren Solltemperaturen liegen. In einer bevorzugten Ausführung der Erfindung sind verschiedenen Solltemperaturbereichen verschiedene Einsätze zugeordnet, wobei die Curie-Temperatur des magnetokalorischen Materials, aus dem der Einsatz zumindest teilweise besteht, innerhalb des zugehörigen Solltemperaturbereiches liegt. Die Zuordnung, welcher magnetokalorische Einsatz für eine vorgegebene Solltemperatur des Kalibriervolumens am besten für eine magnetokalorische Temperierung geeignet ist, wird vorzugsweise in einem nichtflüchtigen Speicher des Temperaturkalibrators gespeichert, so dass nach Vorgabe der Solltemperatur der Temperaturkalibrator auf einer Anzeigeeinrichtung anzeigen kann, welcher Einsatz in den Temperaturkalibrator einzusetzen ist, um eine möglichst optimale magnetokalorische Temperierung zu ermöglichen. Dazu bietet es sich an, mögliche Einsätze z.B. mit einer oder mehreren Ziffern- oder Buchstabenfolgen zu kennzeichnen. Alternativ dazu können Einsätze auch direkt mit den ihnen jeweils zugeordneten Solltemperaturbereichen gekennzeichnet werden.

Um den Temperaturbereich, der sich mit dem erfindungsgemäßen schnellen magnetokalorischen Temperieren erreichen lässt, zu erweitern, können die aus dem Stand der Technik bekannten und bereits beschriebenen wärmetransportbasierten Temperierprinzipien, wie z.B. der Einsatz von Peltier-Elementen auf den Außenflächen des Metallblocks, mit der magnetokalorischen Temperierung kombiniert werden. In einer bevorzugten Ausführung zum schnelleren Abkühlen wird zunächst mittels der magnetokalorischen Temperierung durch Erhöhung des Magnetfeldes die Temperatur des magnetokalorischen Materials, das sich zum Beispiel im Einsatz des Metallblockkalibrators befindet, erhöht. Dadurch kann Wärme durch die Peltier-Elemente deutlich effizienter und schneller aus dem Kalibriervolumen, in dem sich der erfindungsgemäß aufgeheizte Einsatz befindet, abgepumpt werden, da der Temperaturgradient zumindest zunächst aus dem Kalibriervolumen herausweist. Danach kann, (z.B. 4 Kelvin) bevor das Kalibriervolumen die Solltemperatur erreicht, durch Verringerung der Stärke des Magnetfeldes, dem das magnetokalorische Material des Einsatzes ausgesetzt ist, sehr schnell und insbesondere sehr kontrolliert auf den gewünschten Sollwert eingestellt werden, da die magnetokalorische Temperierung unmittelbar und mit nahezu verschwindender Ansprechzeit die Temperatur des magnetokalorischen Einsatzes im Kalibriervolumen ändert. Somit kann insbesondere zur Feineinstellung in der etwa 2-Kelvin-Umgebung der Solltemperatur die erfindungsgemäße magnetokalorische Temperierung die langsamen und aufgrund der langen Ansprechzeiten auch schwer regelbaren wärmetransportbasierten Temperierprinzipien ergänzen.

In aus dem Stand der Technik bekannten wärmetransportbasierten Temperiereinheiten werden häufig Peltier-Elemente verwendet. Die Richtung des elektrischen Stromes durch die Peltier-Elemente bestimmt dabei, ob die Temperiereinheit als Heizeinheit oder als Kühleinheit verwendet wird. Nachteilig an der wärmetransportbasierten Kühlung des Kalibriervolumens von Temperaturkalibratoren mittels Peltier-Elementen ist sowohl die geringe Effizienz als auch die begrenzte Nettokühlleistung aufgrund der überproportional zum Betriebsstrom ansteigenden ohmschen Wärmeverluste.

In einer weiteren Ausführung der Erfindung wird das schon beschriebene Prinzip der magnetokalorischen Kühlung auch in mindestens einer wärmetransportbasierten Temperiereinheit des Temperaturkalibrators genutzt. Die Verwendung von magnetokalorischen Materialien ist insbesondere in der Kühleinheit der Kalibriereinrichtung von Vorteil, da bei der magnetkalorischen Kühlung die Produktion von ohmscher Wärme minimiert wird. Ohmsche Wärme wird bei der aus dem Stand der Technik bekannten Kühlung durch Bestromung von Peltier-Elementen prinzipbedingt generiert.

Um mittels der magnetokalorischen Kühleinheit des Temperaturkalibrators, die erfindungsgemäß ein magnetokalorisches Material, das einen magnetokalorischen Effekt aufweist, der größer als ein Kelvin Temperaturhub pro 1 Tesla Magnetfelderhhung beträgt, und eine Magnetfeldeinrichtung umfasst, Wärme aus einem zu kühlenden Objekt, z.B. dem Kalibriervolumen, zu pumpen und in ein zu erwärmenden Objekt, z.B. in die Umgebungsluft oder in die Kühlrippen des Temperaturkalibrators, zu transportieren, durchläuft die erfindungsgemäße Kühleinheit im Betrieb als periodische Kältemaschine unter Ausnutzung des magnetokalorischen Effektes erfindungsgemäß die folgenden Verfahrensschritte periodisch in der angegebenen Reihenfolge:
1. Ein thermischer Kontakt zwischen dem zu erwärmenden Objekt und dem magnetokalorischen Material wird hergestellt, wobei sich das magnetokalorische Material in einem Magnetfeld H1 hoher Feldstärke und nicht oder nur in geringem thermischen Kontakt mit dem zu kühlenden Objekt befindet.
2. Der thermische Kontakt zwischen dem zu erwärmenden Objekt und dem magnetokalorischen Material wird gelöst oder zumindest verringert.
3. Das magnetokalorische Material wird einem Magnetfeld H0 geringer Feldstärke ausgesetzt, wobei H0 kleiner als H1 ist. Vorzugsweise ist H0=0 A/m.
4. Ein thermischer Kontakt zwischen dem zu kühlenden Objekt und dem magnetokalorischen Material wird hergestellt, wobei sich das magnetokalorische Material weiterhin im Magnetfeld H0 geringer Feldstärke und nicht oder nur in geringem thermischen Kontakt mit dem zu erwärmenden Objekt befindet.
5. Der thermische Kontakt zwischen dem zu kühlenden Objekt und dem magnetokalorischen Material wird gelöst oder zumindest verringert.
6. Das magnetokalorische Material wird wieder dem Magnetfeld H1 hoher Feldstärke ausgesetzt, wobei H1 größer als H0 ist.

Erfindungsgemäß wird so Wärme vom zu kühlenden Objekt in das zu erwärmende Objekt gepumpt bzw. transportiert, solange die Temperatur des zu kühlenden Objektes nicht um mehr als Delta_T kälter ist als das zu erwärmende Objekt. Dabei ist Delta_T die Temperaturabsenkung des magnetokalorischen Materials aufgrund der im Schritt 3 erfolgten Magnetfeldreduzierung.

Die erfindungsgemäße magnetokalorische Kühleinheit des Temperaturkalibrators kann auch als Heizeinheit betrieben werden, indem unter Ausnutzung des magnetokalorischen Effektes die obigen Verfahrensschritte periodisch in der umgekehrten Reihenfolge ausgeführt werden.

Um eine Gesamttemperaturdifferenz von mehr als -70K gegenüber der Temperatur der Umgebung oder gegenüber der Temperatur eines mit einem anderen Verfahren vorgekühlten Volumens zu erreichen, werden in einer bevorzugten Ausführung der erfindungsgemäßen magnetokalorischen Temperiereinheit mehrere magnetokalorische Kühleinheiten in Reihe angeordnet und betrieben, so dass die vom Kalibriervolumen abzuführende Wärme nacheinander durch die genannten magnetokalorischen Kühleinheiten transportiert wird. Dabei muss eine einzelne der genannten Einheiten nur eine Temperaturdifferenz von wenigen Kelvin aufrechterhalten, um insgesamt eine Temperaturdifferenz von mehr als - 70K zu erreichen.

Da, wie bereits erwähnt, der magnetokalorische Effekt eines bestimmten Materials in der Umgebung der Curie-Temperatur dieses Materials am größten ist, wird in einer erfindungsgemäßen magnetokalorischen Kühleinheit der Temperaturkalibriereinrichtung vorzugsweise ein magnetokalorisches Material verwendet, dessen Curie-Temperatur in der Umgebung der Arbeitstemperatur, d.h. zwischen der Temperatur der wärmeren und der kälteren Seite der Kühleinheit im Betrieb liegt.

Bei einem Betrieb von mehreren Kühleinheiten in Reihe liegen die Arbeitstemperaturen dieser Kühleinheiten in einem großen Temperaturintervall, der von der Umgebungstemperatur von z.B. 20°C (bei der Kühleinheit die in thermischem Kontakt mit der Umgebung steht) bis mindestens zur tiefsten Solltemperatur von z.B. -50°C des Kalibriervolumens der Kalibriereinrichtung (bei der Kühleinheit die in thermischem Kontakt mit dem Kalibriervolumen steht) reicht. Daher werden in den in Reihe betriebenen magnetokalorischen Temperiereinheiten des tragbaren Temperaturkalibrators magnetokalorische Materialien mit vorzugsweise unterschiedlichen Curie-Temperaturen verwendet.

In einer Ausführungsform der erfindungsgemäßen magnetokalorischen Kühleinheit wird der thermische Kontakt zwischen einem zu kühlendem oder zu erwärmenden Objekt und dem magnetokalorischen Material dadurch hergestellt, dass das Objekt und das magnetokalorische Material durch Aufeinanderpressen in einen lösbaren Materialkontakt gebracht werden.

In einer vorzugsweisen Ausführung wird der thermische Kontakt zwischen dem magnetokalorischen Material und einem Objekt hergestellt bzw. erhöht, indem ein Fluid durch das magnetokalorische Material, durch das Objekt und wieder zurück durch das magnetokalorische Material gepumpt wird.

In einer vorzugsweisen Ausführung des tragbaren Temperaturkalibrators mit mehreren Kühleinheiten, werden die angegebenen Verfahrensschritte 1 bis 6 von den Kühleinheiten synchron durchlaufen.

## Patentansprüche

1. Vorrichtung Temperaturkalibrator zum Kalibrieren von Temperaturfühlern, wobei der Temperaturkalibrator
- mindestens ein zu temperierendes Kalibriervolumen, in das die zu kalibrierenden Temperaturfühler eingebracht werden können,
- mindestens eine Temperiereinheit, die über einen oder mehrere Wärmeleitungskörper in thermischem Kontakt mit dem Kalibriervolumen steht,
- mindestens einen Temperatursensor, der in thermischem Kontakt mit dem genannten Kalibriervolumen steht,
- und mindestens eine elektrische Steuereinheit, die mit der mindestens einen Temperiereinheit und dem mindestens einen Temperatursensor elektrisch verbunden ist, umfasst,
**dadurch gekennzeichnet, dass**
- der Temperaturkalibrator ferner mindestens ein magnetokalorisches Material umfasst, das einen magnetokalorischen Effekt aufweist, der größer als 1 Kelvin Temperaturhub pro 1 Tesla Magnetfelderhöhung beträgt und dass
- der Temperaturkalibrator mindestens eine Magnetfelderzeugungseinrichtung umfasst.

2. Temperaturkalibrator nach Anspruch 1, **dadurch gekennzeichnet, dass** das genannte magnetokalorische Material mehr als drei Gewichtsprozent Gadolinium, Mangan oder Eisen enthält.

3. Temperaturkalibrator nach Anspruch 1, **dadurch gekennzeichnet, dass** die genannte Magnetfelderzeugungseinrichtung elektrisch mit der genannten Steuereinheit verbunden ist und die genannte Magnetfelderzeugungseinrichtung dazu ausgelegt ist, das Magnetfeld, dem das genannte magnetokalorische Material ausgesetzt ist, gesteuert durch die Steuereinheit einzustellen.

4. Temperaturkalibrator nach Anspruch 3, **dadurch gekennzeichnet, dass** die genannte Magnetfelderzeugungseinrichtung mindestens einen Permanentmagneten umfasst, dessen Position und/oder Orientierung mittels eines Elektromotors durch die Steuereinheit geändert werden kann.

5. Temperaturkalibrator nach Anspruch 3, **dadurch gekennzeichnet, dass** die genannte Magnetfelderzeugungseinrichtung mindestens einen Elektromagneten umfasst, dessen Spulenstrom durch die Steuereinheit geregelt wird.

6. Temperaturkalibrator nach Anspruch 1, **dadurch gekennzeichnet, dass** der genannte Wärmeleitungskörper oder mindestens ein in das Kalibriervolumen einsetzbarer Einsatz zumindest teilweise aus einem magnetokalorischen Metall oder zumindest teilweise aus einer magnetokalorischen Legierung besteht.

7. Temperaturkalibrator nach Anspruch 6, **dadurch gekennzeichnet, dass** der Temperaturkalibrator einen nichtflüchtigen Speicher umfasst, in dem gespeichert werden kann, welcher magnetokalorische Einsatz für eine vorgegebene Solltemperatur des Kalibriervolumens am besten für eine magnetokalorische Temperierung geeignet ist.

8. Verfahren zum Betrieb einer magnetokalorischen Temperiereinheit eines Temperaturkalibrators, wobei der Temperaturkalibrator mindestens ein zu kühlendes und ein zu erwärmendes Objekt umfasst,
**dadurch gekennzeichnet, dass** die magnetokalorische Temperiereinheit mindestens ein magnetokalorisches Material umfasst, das einen magnetokalorischen Effekt aufweist, der größer als 1 Kelvin Temperaturhub pro 1 Tesla Magnetfelderhöhung beträgt, und der Temperaturkalibrator mindestens eine Magnetfelderzeugungseinrichtung umfasst,
wobei die folgenden Verfahrensschritte periodisch in der angegebenen Reihenfolge durchlaufen werden:
a) Ein thermischer Kontakt zwischen dem zu erwärmenden Objekt und dem magnetokalorischen Material der Temperiereinheit wird hergestellt, wobei sich das magnetokalorische Material der Temperiereinheit in einem Magnetfeld H1 hoher Feldstärke und nicht oder nur in geringem thermischen Kontakt mit dem zu kühlenden Objekt befindet.
b) Der thermische Kontakt zwischen dem zu erwärmenden Objekt und dem magnetokalorischen Material der Temperiereinheit wird gelöst oder zumindest verringert.
c) Das magnetokalorische Material der Temperiereinheit wird einem Magnetfeld H0 geringer Feldstärke ausgesetzt, wobei H0 kleiner als H1 ist.
d) Ein thermischer Kontakt zwischen dem zu kühlenden Objekt und dem magnetokalorischen Material der Temperiereinheit wird hergestellt, wobei sich das magnetokalorische Material der Temperiereinheit weiterhin im Magnetfeld H0 geringer Feldstärke und nicht oder nur in geringem thermischen Kontakt mit dem zu erwärmenden Objekt befindet.
e) Der thermische Kontakt zwischen dem zu kühlenden Objekt und dem magnetokalorischen Material der Temperiereinheit wird gelöst oder zumindest verringert.
f) Das magnetokalorische Material der Temperiereinheit wird wieder dem Magnetfeld H1 hoher Feldstärke ausgesetzt, wobei H1 größer als H0 ist.

## Claims

1. A temperature calibrator for calibrating temperature sensors, wherein the temperature calibrator comprises
- at least one calibration volume, in which the temperature sensors to be calibrated can be inserted,
- at least one temperature control unit, which is in thermal contact with the calibration volume via one or several thermally conductive bodies,
- at least one temperature sensor, which is in thermal contact with said calibration volume,
- and at least one electrical control unit, which is electrically connected with the at least one temperature control unit and the at least one temperature sensor,
**characterized in that**
- the temperature calibrator further comprises at least one magnetocaloric material, whose magnetocaloric effect provides a temperature swing of more than 1 Kelvin per 1 Tesla of induced magnetic strength and that
- the temperature calibrator comprises at least one magnetic field generating device.

2. The temperature calibrator according to claim 1, **characterized in that** said magnetocaloric material contains more than three weight percent of gadolinium, manganese or iron.

3. The temperature calibrator according to claim 1, **characterized in that** said magnet field generating unit is electrically connected with said control unit and that said magnet field generating unit is configured to adjust the magnetic field, to which said magnetocaloric material is exposed, under the control of the control unit.

4. The temperature calibrator according to claim 3, **characterized in that** said magnetic field generating unit comprises at least one permanent magnet, the position and/or orientation of which can be modified by the control unit by means of an electric motor.

5. The temperature calibrator according to claim 3, **characterized in that** said magnetic field generating device comprises at least one electromagnet, the coil current of which can be controlled by the control unit.

6. The temperature calibrator according to claim 1, **characterized in that** said thermally conductive body or at least one insert insertable into the calibration volume is composed at least partially of a magnetocaloric metal or at least partially of a magnetocaloric alloy.

7. The temperature calibrator according to claim 6, **characterized in that** the temperature calibrator comprises a non-transitory memory, in which a mapping is stored, indicating which magnetocaloric insert is best suited for a magnetocaloric temperature adjustment for a specified nominal temperature of the calibration volume.

8. A method for controlling the temperature of the calibration volume of a temperature calibrator, wherein the temperature calibrator comprises at least one object to be cooled and one object to be heated,
**characterized in that** the magnetocaloric temperature adjustment unit has a magnetocaloric effect, which provides a temperature swing of more than 1 Kelvin per 1 Tesla of induced magnetic strength, and
the temperature calibrator comprises at least one magnetic field generating device, wherein the following method steps are periodically executed in the given order:
a) A thermal contact between the object to be heated and the magnetocaloric material of the temperature control unit is established, wherein the magnetocaloric material of the temperature control unit is located within a magnetic field H1 having a strong field intensity and has no or only little thermal contact with the object to be cooled.
b) The thermal contact between the object to be heated and the magnetocaloric material of the temperature control unit is severed or at least reduced.
c) The magnetocaloric material of the temperature control unit is exposed to a magnetic field H0 having a low field intensity, wherein H0 is smaller than H1.
d) A thermal contact between the object to be cooled and the magnetocaloric material of the temperature control unit is established, wherein the magnetocaloric material of the temperature control unit is still located within the magnetic field H0 having a low field intensity and has no or only little thermal contact with the object to be heated.
e) The thermal contact between the object to be cooled and the magnetocaloric material of the temperature control unit is severed or at least reduced.
f) The magnetocaloric material of the temperature control unit is again exposed to the magnetic field H1 having a high field intensity, wherein H1 is greater than H0.

## Revendications

1. Etalonneur de température pour l'étalonnage de capteurs de température, où l'étalonneur de température comprend :
- au moins un volume d'étalonnage à thermo-réguler, dans lequel les capteurs de température à étalonner peuvent être introduits,
- au moins une unité de thermorégulation en contact thermique avec le volume d'étalonnage par l'intermédiaire d'un ou plusieurs corps thermoconducteurs,
- au moins un capteur de température en contact thermique avec ledit volume d'étalonnage,
- et au moins une unité de commande électrique électriquement connectée avec l'au moins une unité de thermorégulation et l'au moins un capteur de température,
**caractérisé en ce que**
- l'étalonneur de température comprend en outre au moins un matériau magnétocalorique présentant un effet magnétocalorique supérieur à 1 Kelvin de variation de température par 1 Tesla d'augmentation du champ magnétique et que
- l'étalonneur de température comprend au moins un dispositif de génération de champ magnétique.

2. Etalonneur de température selon la revendication 1, **caractérisé en ce que** ledit matériau magnétocalorique contient plus de trois pourcents en poids de gadolinium, de manganèse ou de fer.

3. Etalonneur de température selon la revendication 1, **caractérisé en ce que** ledit dispositif de génération de champ magnétique est électriquement connecté à ladite unité de commande et ledit dispositif de génération de champ magnétique est conçu pour régler le champ magnétique auquel est soumis ledit matériau magnétocalorique sous le contrôle de l'unité de commande.

4. Etalonneur de température selon la revendication 3, **caractérisé en ce que** ledit dispositif de génération de champ magnétique comprend au moins un aimant permanent dont la position et/ou l'orientation peut être modifiée au moyen d'un moteur électrique par l'unité de commande.

5. Etalonneur de température selon la revendication 3, **caractérisé en ce que** ledit dispositif de génération de champ magnétique comprend au moins un électroaimant, dont le courant de bobine est commandé par l'unité de commande.

6. Etalonneur de température selon la revendication 1, **caractérisé en ce que** ledit corps thermoconducteur ou au moins un insert pouvant être inséré dans le volume d'étalonnage est composé au moins partiellement d'un métal magnétocalorique ou au moins partiellement d'un alliage magnétocalorique.

7. Etalonneur de température selon la revendication 6, **caractérisé en ce que** l'étalonneur de température comprend une mémoire non volatile dans laquelle l'on peut stocker lequel des inserts magnétocaloriques est le plus adapté à une thermorégulation magnétocalorique pour une température prescrite donnée du volume d'étalonnage.

8. Procédé pour le fonctionnement d'une unité de thermorégulation magnétocalorique d'un étalonneur de température, l'étalonneur de température comprenant au moins un objet à refroidir et un objet à chauffer,
**caractérisé en ce que** l'unité de thermorégulation magnétocalorique comprend au moins un matériau magnétocalorique présentant un effet magnétocalorique supérieur à 1 Kelvin de variation de température par 1 Tesla d'augmentation du champ magnétique et que l'étalonneur de température comprend au moins un dispositif de génération de champ magnétique, où les étapes de procédé suivantes sont mises en oeuvre périodiquement dans l'ordre indiqué :
a) Un contact thermique est établi entre l'objet à chauffer et le matériau magnétocalorique de l'unité de thermorégulation, le matériau magnétocalorique de l'unité de thermorégulation se trouvant dans un champ magnétique H1 de forte intensité et n'étant pas ou que très peu en contact thermique avec l'objet à refroidir.
b) Le contact thermique entre l'objet à chauffer et le matériau magnétocalorique de l'unité de thermorégulation est rompu ou du moins réduit.
c) Le matériau magnétocalorique de l'unité de thermorégulation est soumis à un champ magnétique H0 de faible intensité, H0 étant inférieur à H1.
d) Un contact thermique est établi entre l'objet à refroidir et le matériau magnétocalorique de l'unité de thermorégulation, le matériau magnétocalorique de l'unité de thermorégulation se trouvant toujours dans le champ magnétique H0 de faible intensité et n'étant pas ou que très peu en contact thermique avec l'objet à chauffer.
e) Le contact thermique entre l'objet à refroidir et le matériau magnétocalorique de l'unité de thermorégulation est rompu ou du moins réduit.
f) Le matériau magnétocalorique de l'unité de thermorégulation est à nouveau soumis au champ magnétique H1 de haute intensité, H1 étant supérieur à H0.
